# EUROPÄISCHE PATENTSCHRIFT

(11) **EP 1 152 911 B1**
(45) Veröffentlichungstag und Bekanntmachung des Hinweises auf die Patenterteilung: **11.06.2003**
(21) Anmeldenummer: 00988655.7
(22) Anmeldetag: 25.11.2000
(51) Int. Cl.: B60H 1/32, F25B 9/00, F25B 9/06

(54) **KLIMAANLAGE FÜR KRAFTFAHRZEUGE UND VERFAHREN ZUM BETREIBEN EINER KLIMAANLAGE FÜR KRAFTFAHRZEUGE**
MOTOR VEHICLE AIR-CONDITIONING SYSTEM AND A METHOD FOR OPERATING A MOTOR VEHICLE AIR CONDITIONING SYSTEM
SYSTEME DE CLIMATISATION POUR VEHICULES AUTOMOBILES ET PROCEDE POUR L'EXPLOITATION D'UN SYSTEME DE CLIMATISATION POUR VEHICULES AUTOMOBILES

(30) Priorität: 09.12.1999 DE 19959439
(43) Veröffentlichungstag der Anmeldung: 14.11.2001
(73) Patentinhaber: ROBERT BOSCH GMBH, 70442 Stuttgart (DE)
(72) Erfinder: HESSE, Ullrich, 71563 Affalterbach (DE); TIEDEMANN, Thomas, 71636 Ludwigsburg (DE)
(86) Internationale Anmeldenummer: DE0004190
(87) Internationale Veröffentlichungsnummer: WO01042035

(56) Entgegenhaltungen:
- EP-A- 0 248 296
- DE-A- 2 636 024
- DE-A- 4 315 924
- DE-A- 19 802 613

## Beschreibung

### Stand der Technik

Die Erfindung betrifft eine Klimaanlage für Kraftfahrzeuge nach dem Oberbegriff des Anspruchs 1 und ein Verfahren zum Betreiben einer Klimaanlage für Kraftfahrzeuge.

Bei Klimaanlagen für Kraftfahrzeuge wird heute fast ausschließlich der sogenannte Kaltdampfkompressionsprozeß mit Tetrafluorethan (R134a) als Kältemittel eingesetzt. Der Kältemittelkreislauf besteht u.a. aus einem Verdampfer, einem Verdichter, einem Verflüssiger und einem Expansionsventil. Im Expansionsventil erfolgt eine isenthalpe Drosselung des Kältemittels. Einer isentropen, idealen Expansion kann man nur mit Hilfe einer Expansionsmaschine näherkommen, wobei solche Maschinen bislang bei Fahrzeugklimaanlagen nicht verwendet wurden. Dies hat mehrere Gründe. Zum einen war die energetische Verbesserung, die sich durch Expansionsmaschinen erzielen hätte lassen, relativ gering und stand in keinem Verhältnis zum höheren Aufwand im Vergleich zu einem einfachen Expansionsventil. Zum anderen sind die bislang infragekommenden Expansionsmaschinen nur unter erheblichem technischem Mehraufwand steuerbar, wobei hierzu eine Drehzahlregelung oder eine Steuerung der Ein- und Auslaßventile notwendig wäre. Vor allem ist bei den bisher infragekommenden Maschinen eine schnelle Zerstörung oder ein hoher Verschleiß bei Betrieb mit aus der Flüssigkeit heraus expandierendem Kältemittel zu erwarten gewesen.

Aus der DE 198 02 613 A, die den nächstkommenden Stand der Technik bildet, ist eine Klimaanlage für Kraftfahrzeuge bekannt, bei der eine Druckwellenmaschine zur Expansion eines Gases, vorzugsweise von Luft, verwendet wird. Der beschriebene Prozeß ist ein reiner Kaltluftprozeß, der als geschlossener oder als offener Prozeß betrieben werden kann.

Aufgabe der Erfindung ist es, eine Klimaanlage für Fahrzeuge zu schaffen, die sich bei nur gering höherem Bauaufwand gegenüber herkömmlichen Klimaanlagen durch eine deutliche Leistungssteigerung auszeichnet. Darüber hinaus soll ein Verfahren zum Betreiben einer Klimaanlage angegeben werden, welches zu einer höheren Leistungszahl führt.

### Vorteile der Erfindung

Die Aufgabe der Verbesserung einer Klimaanlage wird dadurch gelöst, daß die Klimaanlage einen Kältemittelkreislauf, und wenigstens einen Verdichter sowie eine als Druckwellenmaschine ausgebildete Expansionsvorrichtung in der Kältemittel in einen Naßdampf-Zustand gebracht wird, aufweist.

Die Aufgabe zur Schaffung eines neuartigen Verfahrens wird erfindungsgemäß dadurch gelöst, daß eine Druckwellenmaschine in einen Kältemittelkreislauf integriert wird und Kältemittel in der Druckwellenmaschine wenigstens teilweise in einen Naßdampf-Zustand gebracht wird. Das Kältemittel wird von einem hohen auf ein niedriges Druckniveau expandiert. Vorzugsweise wird gleichzeitig Kältemittel zudem von einem niedrigen Druckniveau auf ein hohes Druckniveau verdichtet.

Eine Druckwellenmaschine zeichnet sich durch eine einfache Herstellung aus. Der Rotor kann beispielsweise aus Strangpreßprofilen gefertigt sein und die Gehäuseteile aus Aluminium gefräst oder als Druckgußteile produziert werden. Die Rotordrehzahl, die in der Größenordnung von z.B. 10.000 bis 20.000 Umdrehungen pro Minute liegt, führt dazu, daß keine besonders hohen Anforderungen an die Festigkeit gestellt werden. Im Gegensatz zu anderen Expansionsmaschinen ist bei der Druckwellenmaschine keine Steuerung oder Regelung erforderlich, vorzugsweise auch nicht im Zustrom und im Abstrom des Kältemittels. Da keine Ventile erforderlich sind, kann die Klimaanlage mit einem hohen Flüssigkeitsgehalt im Naßdampfgebiet betrieben werden. Ferner gibt die Druckwellenmaschine die Möglichkeit, ohne Antriebsvorrichtung auszukommen, denn eine Druckwellenmaschine kann ausschließlich durch die Impulskräfte des in ihr expandierenden Stoffes, hier eines Kältemittels, angetrieben werden, wie Versuche ergeben haben. Mit der Druckwellenmaschine kann und wird vorzugsweise auch in den Naßdampfbereich expandiert, was bislang bei Expansionsmaschinen aufgrund deren Anfälligkeit im Hinblick auf die Zerstörung oder den Verschleiß der bewegten Teile, insbesondere der Schaufeln bei Expansionsturbinen, vermieden wurde. Aus diesem Grunde wurden auch Expansionsmaschinen fast ausschließlich nur in Kaltgasprozessen verwendet, wo solche Probleme nicht auftreten.

Vorteilhafte Ausgestaltungen der Erfindung bilden die Gegenstände der Unteransprüche.

Vorzugsweise ist das Kältemittel Kohlendioxid, welches im Kältemittelkreislauf z.B. bei der Anwendung in Fahzeugklimaanlagen bei der Expansion zumindest zeitweise und abhängig von der Umgebungstemperatur aus einem überkritischen Zustand in einen Naßdampf-Zustand gebracht wird. Diese Ausführungsform der erfindungsgemäßen Klimaanlage ist von besonderer Bedeutung. Die Kombination aus Kohlendioxid und der Einsatz einer Druckwellenmaschine führen zu großen Vorteilen. Bei Kohlendioxid als Kältemittel lassen sich nämlich im Vergleich zu dem bislang verwendeten Tetrafluorethen durch eine Expansionsmaschine größere energetische Verbesserungen und ein Zugewinn an Kälteleistung erzielen. Die erfindungsgemäße Klimaanlage kann gemäß einer bevorzugten Ausführungsform in Abhängigkeit von der Temperatur der Wärmesenke, also der Umgebungstemperatur im Klimabetrieb oder der Innenraumtemperatur im Wärmepumpenbetrieb, eine transkritische oder eine unterkritische Prozeßführung aufweisen. Da das Kohlendioxid einen kritischen Punkt von ca. 31°C aufweist, können Betriebsbedingungen auftreten, bei denen der Kältemittelkreislauf im transkritischen Bereich läuft, mit einer Expansion aus dem überkritischen in den Naßdampf-Zustand, oder im unterkritischen Bereich, bei dem das Kältemittel aus einem flüssigen in einen naßdampfförmigen Zustand überführt werden kann.

Gemäß einer bevorzugten Ausführungsform sind Druckwellenmaschine und Verdichter so miteinander verschaltet, daß beim Expansionsvorgang in der Druckwellenmaschine frei werdende Leistung zur Verdichtung des Kältemittels genutzt wird, wodurch der Antrieb für den Verdichter deutlich geringer dimensioniert werden kann. Der Aufwand für die Druckwellenmaschine wird so wenigstens teilweise wieder kompensiert. Die Expansionsarbeit wird vorteilhafterweise in der Druckwellenmaschine selbst als Kompressionsarbeit mindestens teilweise wieder genutzt, so daß die noch erforderliche Antriebsarbeit für den zusätzlich noch erforderlichen Verdichter entsprechend einem Betrieb ohne Druckwellenmaschine geringer ist. Bei dieser Ausführungsform wird der Verdichterabschnitt der Druckwellenmaschine entsprechend in den Kältemittelkreislauf eingebunden. Es ist aber auch möglich, mehrere oder verzweigte Kältemittelkreisläufe vorzusehen, wobei der Verdichterabschnitt dann in einen dieser Kreisläufe eingebunden ist und sich das Kältemittel mit dem Medium des Kreislaufes, in dem der Verdichterabschnitt integriert ist, vermischen kann.

Der Verdichter, der als Zusatzverdichter neben der Druckwellenmaschine weiterhin noch vorgesehen ist, hat eine geringere Leistung gegenüber einem Kältemittelkreislauf ohne Druckwellenmaschine.

Der Zusatzverdichter kann mit dem Verdichterabschnitt der Druckwellenmaschine in Reihe oder parallel geschaltet sein.

Gemäß einer bevorzugten Ausführungsform wird die Druckwellenmaschine ausschließlich durch die Impulskräfte der sie durchströmenden Kältemittel-Massenströme angetrieben. wofür prinzipbedingt ohnehin nur eine sehr geringe Antriebsleistung erforderlich ist.

Eine Ausgestaltung des erfindungsgemäßen Verfahrens sieht vor, als Kältemittel Kohlendioxid zu verwenden, welches in der Druckwellenmaschine abhängig von der Umgebungstemperaturin einen Naßdampf- Zustand gebracht werden kann.

Weitere Merkmale und Vorteile der Erfindung ergeben sich aus der nachfolgenden Beschreibung und aus den nachfolgenden Zeichnungen, auf die Bezug genommen wird.

### Zeichnungen

- Figur 1 zeigt eine erste Ausführungsform der erfindungsgemäßen, eine Druckwellenmaschine aufweisenden Klimaanlage in Form deren Kältemittelkreislaufs,
- Figur 2 zeigt schematisch eine Druckwellenmaschine, wie sie bei der erfindungsgemäßen Klimaanlage verwendet wird,
- Figur 3 zeigt eine zweite Ausführungsform der erfindungsgemäßen Klimaanlage,
- Figur 4 zeigt ein Druck-Enthalpie-Diagramm für die erfindungsgemäße Klimaanlage nach Figur 3 bei unterkritischer Prozeßführung und ohne den Einfluß des Zusatzverdichters,
- Figur 5 zeigt ein Druck-Enthalpie-Diagramm für die erfindungsgemäße Klimaanlage bei transkritischer Prozeßführung in einer Darstellung ohne eine Aufteilung der Verdichtungsarbeit Wᵥ in rückgewonnene Expansinonsarbeit W_{Ex} und die Arbeit W_{vz} des Zusatzverdichters.
- Figur 6 zeigt eine Umfangsabwicklung des Rotors der in Figur 2 gezeigten Druckwellenmaschine, und
- Figur 7 zeigt eine dritte Ausführungsform der erfindungsgemäßen Klimaanlage.

Beschreibung der Ausführungsbeispiele

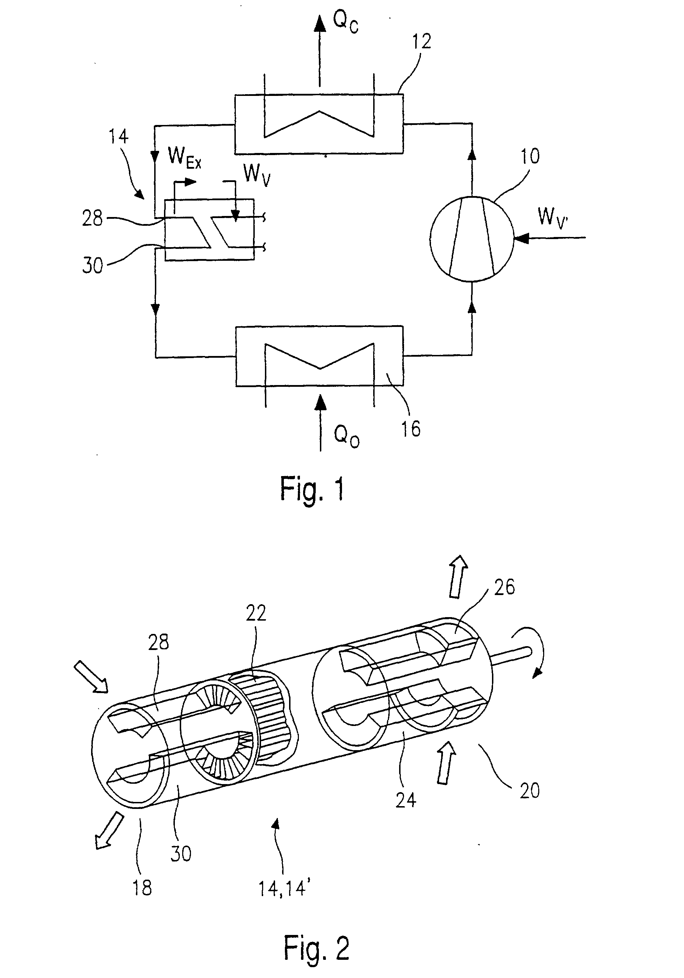

In Figur 1 ist eine Klimaanlage für ein Kraftfahrzeug durch ihren Kältemittelkreislauf dargestellt. Als Kältemittel wird Kohlendioxid eingesetzt, das bis auf einen überkritischen Druck gebracht werden kann . Der Kältemittelkreislauf umfaßt in Strömungsrichtung aufgezählt einen Verdichter 10, einen Gaskühler oder Verflüssiger 12, eine Druckwellenmaschine 14, welche eine Expansionsvorrichtung bildet, und einen Verdampfer 16. Diese Elemente sind über Leitungen miteinander verbunden. Die Druckwellenmaschine 14 hat in dieser Ausführungsform eine Expansions- und eine Verdichterseite, wie anhand Figur 2 noch näher beschrieben wird, wobei die Expansionsseite in den dargestellten Kältemittelkreislauf und die Verdichterseite in einen zweiten, nicht näher dargestellten Kreislauf integriert ist und wobei der zweite Kreislauf nicht zwingend zur Klimatisierung oder ausschließlich zur Klimatisierung des Fahrgastinnenraums verwendet wird. Die Kältemittel beider Kreisläufe können sich bei dieser Ausführungsform zum Teil vermischen.

Die erfindungsgemäße Klimaanlage arbeitet folgendermaßen: Im Verdichter 10 wird das Kohlendioxid verdichtet, wobei der Verdichter 10 eine Energie W_{V'} aufnimmt. Im anschließenden Gaskühler oder Verflüssiger 12 wird dem Kohlendioxid die Wärmeenergie Q_{C} entzogen. Das Kohlendioxid befindet sich bei der Anwendung in Fahrzeugklimaanlagen während des Ganzjahreseinsatzes häufig im überkritischen Zustand. In der anschließenden Druckwellenmaschine 14 expandiert das Kohlendioxid bis in den Naßdampfbereich, wobei durch die Druckwellenmaschine eine Energie W_{Ex} gewonnen wird. Diese Energie W_{Ex} wird im Verdichterabschnitt zur Verdichtung von Kältemittel verwendet, wobei der Verdichterabschnitt eine Energie W_{V} zu seinem Betrieb erfordert, die durch die Energie W_{Ex} bereitgestellt wird. Im Verdampfer 16 wird dem Kohlendioxid weitere Energie Q_{O} zugeführt, so daß das Kohlendioxid anschließend einen Zustand nahe der oder an der Grenze von Naßdampf zu dampfförmig einnimmt oder rein dampfförmig ist.

Die Druckwellenmaschine 14 ist in Figur 2 dargestellt. Die Druckwellenmaschine 14 weist in einer möglichen Ausführungsform eine erste Gehäuseseite, im folgenden Expansionsseite 18 genannt, und eine axial gegengesetzte zweite Gehäuseseite, im folgenden Verdichterseite 20 genannt, sowie einen dazwischen angeordneten Rotor 22, der teilweise aufgeschnitten dargestellt ist, auf.

Die Druckwellenmaschine 14 hat auf der Verdichterseite 20 einen Einlaß 24 und einen Auslaß 26, jeweils durch Pfeile und entsprechende Kanäle dargestellt. Auf der Expansionsseite 18 sind ebenfalls ein Einlaß 28 und ein Auslaß 30 vorgesehen, ebenfalls durch Pfeile und Kanäle dargestellt. Zu beachten ist, daß die Kanäle für den Einlaß 24 und den Auslaß 30 einen größeren Querschnitt als die Kanäle für den Auslaß 26 und den Einlaß 28 haben.

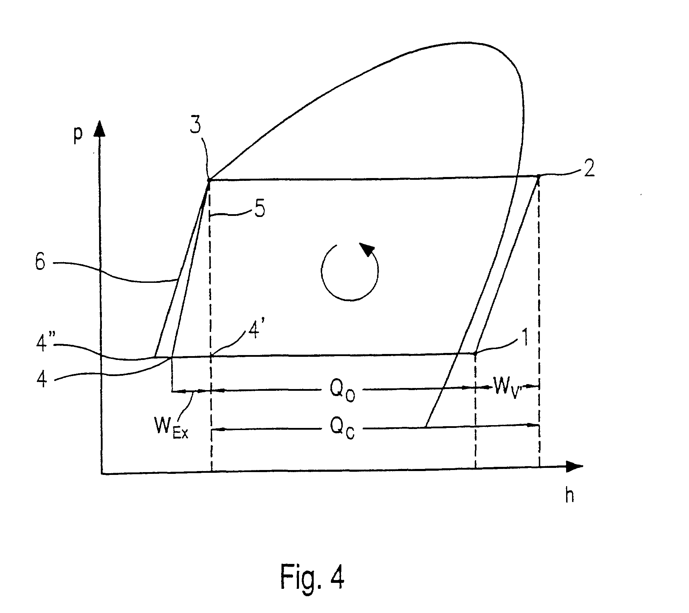

Da in der Druckwellenmaschine 14 sowohl eine Expansion als auch eine Verdichtung stattfindet, läßt sich die in Figur 1 dargestellte Ausführungsform dadurch noch modifizieren, daß, wie in Figur 3 gezeigt ist, die Druckwellenmaschine 14 gleichzeitig auch als Verdichter innerhalb des Kältemittelkreislaufs wirkt. Die Verwendung der Energie W_{Ex} zur Verdichtung erfolgt somit noch innerhalb der Druckwellenmaschine 14 selbst. Zur Unterscheidung gegenüber der Ausbildung nach Figur 1 wird die Druckwellenmaschine in Figur 3 mit 14', und alternativ in Figur 2 ebenfalls mit 14' bezeichnet. Stromabwärts des Verdampfers 16 führt eine Leitung 32 unmittelbar in die Druckwellenmaschine 14', genauer gesagt in deren Verdichterabschnitt zwischen Einlaß 24 und Auslaß 26, und über eine Leitung 34 für verdichtetes Kältemittel zum Verflüssiger 12. Parallel zu dem Verdichterabschnitt in der Druckwellenmaschine 14' ist ein Zusatzverdichter 37 vorgesehen, der eine Energie W_{V"} während seines Betriebs aufnimmt.

in dem in Figur 4 gezeigten Druck-Enthalpie-Diagramm sind die zuvor bereits beschriebenen zugeführten und abgeführten Energiemengen für eine unterkritische Prozeßführung exemplarisch dargestellt, wobei zu Zwecken der Vereinfachung der Einfluß des Zusatzverdichters nicht berücksichtigt ist. Vom Punkt 1 zu Punkt 2 wird das Kältemittel unter Zuführung der Energie W_{V'} verdichtet, vom Punkt 2 zum Punkt 3 im Verflüssiger 12 isobar und unter Abgabe der Energie Q_{C} verflüssigt oder an die Grenze Flüssigkeit-Naßdampf gebrachte, vom Punkt 3 zu Punkt 4 unter Abgabe der Energie W_{Ex} in den Naßdampfbereich entspannt und schließlich unter Aufnahme der Energie Q_{O} von den Punkten 4 bis zum Punkt 1 im Verdampfer vollständig in den dampfförmigen Zustand überführt. Der Energiegewinn, der sich durch die erfindungsgemäße Klimaanlage gegenüber den mit einem Expansionsventil versehenen Klimaanlagen erzielen läßt, ist Figur 4 deutlich zu entnehmen. Mit der unterbrochenen Linie 5 ist nämlich die isenthalpe Expansion dargestellt, die das Kältemittel vom Punkt 3 zum Punkt 4' im Expansionsventil durchführt. Damit läßt sich aus dem bisherigen Kreislauf keine zusätzliche Energie W_{Ex} gewinnen, die zum Antrieb beispielsweise eines Verdichters verwendet werden kann. Mit der erfindungsgemäßen Klimaanlage nähert man sich deutlich dem idealen Kreisprozeß, der durch eine durch die Linie 6 symbolisierte isentrope Expansion vom Punkt 3 zum Punkt 4" gekennzeichnet ist. In Figur 4 ist auch zu erkennen, daß bei der erfindungsgemäßen Klimaanlage gegenüber dem bisherigen Prozeß die Energieaufnahme W_{V'} im Verdichter 10 unverändert bleibt, während sich die Nutz-Kälteenergie Q₀ um den Betrag W_{Ex}vergrößert. Bei den im Druck-Enthalpie-Diagramm dargestellten Energiemengen handelt es sich, um exakt zu sein, um Mengen spezifischer Energie.

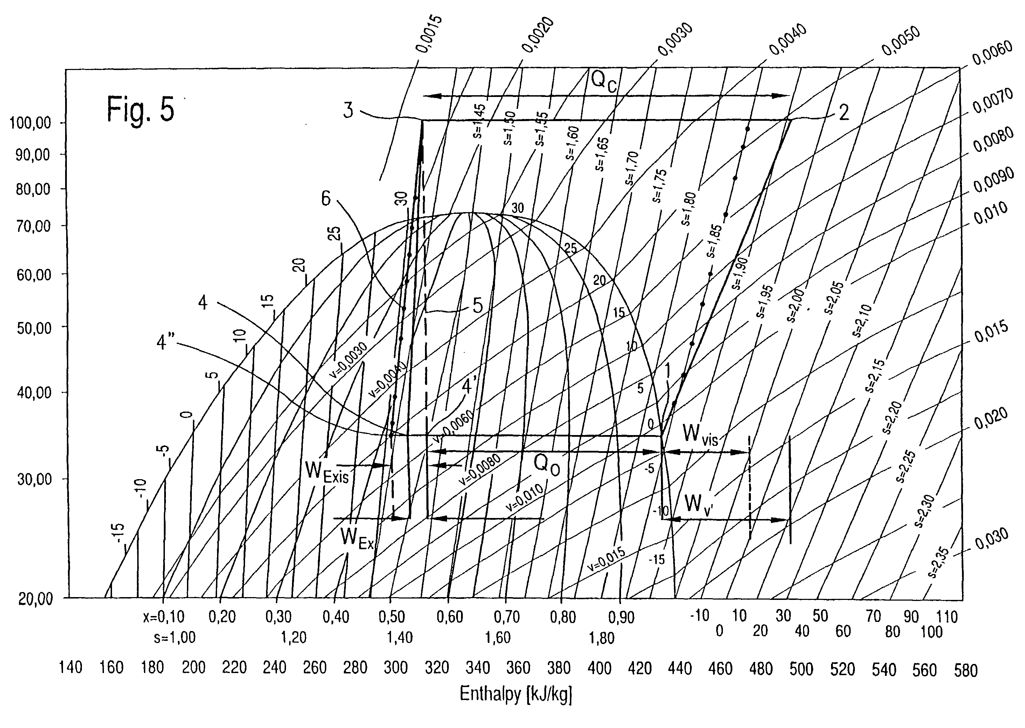

Die erfindungsgemäße Klimaanlage kann nicht nur eine unterkritische Prozeßführung aufweisen, sondern auch eine transkritische, wie im Diagramm nach Fig. 5 dargestellt, wobei zu Zwecken der Vereinfachung der Einfluß des Zusatzverdichters nicht zu erkennen ist. Ob eine unterkritische oder überkritische Prozeßführung notwendig ist, ergibt sich unter anderem aus der Umgebungstemperatur.

In Fig. 5 werden die schon in Zusammenhang mit Fig. 4 benutzten Bezugszahlen erneut verwendet. Der Punkt 1 befindet sich beim dargestellten Prozeßverlauf auf der Sättigungslinie zwischen Dampf- und Naßdampf-Zustand. Von Punkt 1 zum Punkt 2 wird das Kältemittel unter Zuführung der Energie W_{V'} verdichtet, wobei mit unterbrochenen Linien auch eine isentrope Verdichtung unter Zuführung der Energie Wᵥᵢₛ dargestellt ist. Beim Punkt 2 befindet sich das Kältemittel im überkritischen Bereich, den es auch nicht verläßt, wenn es durch den Glaskühler/Verflüssiger 12 strömt und eine isobare Zustandsänderung bis zum Erreichen des Punktes 3 erfährt und die Energie Q_{C} abgibt. Vom Punkt 3 zum Punkt 4 wird das Kältemittel in der Druckwellenmaschine 14' in den Naßdampfbereich entspannt, und zwar unter Abgabe der Energie W_{Ex}. W_{Exis} symbolisiert die Energie, die bei einer isotropen Expansion zu erzielen wäre. Vom Punkt 4 zum Punkt 1 durchläuft das Kältemittel den Verdampfer, in dem es Energie aufnimmt.

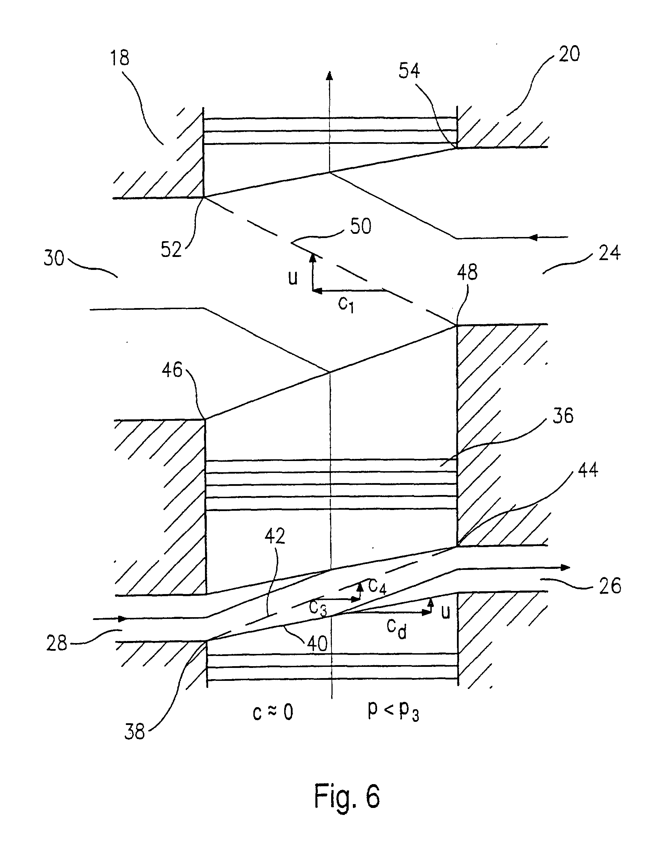

Anhand der Figuren 2 und 6 wird nun kurz die Funktion der Druckwellenmaschine 14' erläutert. In den Figuren 3 und 6 sind zum erleichterten Verständnis die bereits im Zusammenhang mit Figur 2 eingeführten Bezugszahlen für die Einlässe und Auslässe 24 bis 30 ebenfalls verwendet worden.

Im folgenden werden die Zustände innerhalb einer sogenannten Zelle, also dem Raum zwischen benachbarten Flügeln des Rotors, während eines Umlaufs beschrieben, wobei die Zustände des Kältemittels in der Zelle sich während der Drehung ändern. In Figur 6 ist symbolisch eine Zelle mit dem Bezugszeichen 36 versehen. Die Zelle 36 wird von unten nach oben in der Abwicklung nach Figur 6 bewegt. Zu Erklärungszwecken geht man zuerst davon aus, daß sich in der Zelle ein ruhendes Kältemittel bei Umgebungsdruck und Umgebungstemperatur befindet. Wenn die Zelle 36 die Öffnungskante 38 des Einlasses 28 erreicht hat, wird eine Druckwelle in die Zelle 36 eingeleitet, da der Druck des Kältemittels im Einlaß 28 größer als in der Zelle 36 ist. Die Druckwelle bewegt sich mit der Geschwindigkeit c_{d} in die Zelle 36 hinein. Die Gesamtgeschwindigkeit der Druckwelle wird durch eine Linie 40 symbolisiert, welche sich aus der Überlagerung der Geschwindigkeit c_{d} und der Umfangsgeschwindigkeit u ergibt. Das sich bis Erreichen der Öffnungskante 38 in der Zelle 36 befindliche Kältemittel wird einer sprunghaften Druck- und Geschwindigkeitserhöhung ausgesetzt. Auch ein Temperaturanstieg ist zu verzeichnen. Vom Einlaß 28 strömt zu expandierendes Kältemittel in die Zelle 36 nach, und über den Auslaß 26 tritt das nun verdichtete Kältemittel aus der Zelle 36 aus. Wenn die Druckwelle die Verdichterseite 20 erreicht, wurde der gesamte Zelleninhalt auf die Geschwindigkeit C₃ beschleunigt. Aus der Überlagerung der Geschwindigkeit C₃ mit der Umfangsgeschwindigkeit u ergibt sich die in Figur 6 mit unterbrochenen Linien eingezeichnete gedachte Trennlinie 42, die die Grenze zwischen dem über den Einlaß 28 einströmenden Kältemittel und dem sich ursprünglich in der Zelle 36 befundenen, komprimierten und ausströmenden Kältemittel bildet. Die Schließkante 44 für den Auslaß 26 muß so angeordnet sein, daß sie mit dem Auftreffen der Trennlinie 42 übereinstimmt, damit sich keine unerwünschte Reflexion der Druckwelle an der Verdichterseite 20 ergibt und eine maximale Kühlmittelmenge expandiert und komprimiert wird.

Nach dem Schließen der Zelle 36 fördert diese das eingeströmte Kältemittelweiter. Durch den Impuls des Kältemittels und die fortlaufende Druckwelle nimmt der Druck in der Zelle 36 an der Expansionsseite 18 ab. In der Zelle 36 herrscht bei 18 und 20 eine axiale Geschwindigkeit von c ungefähr 0. Mit Erreichen der Öffnungskante 46 des Auslasses 30 herrscht hier im Idealfall der Druck p₄ .Das verdichtete Kältemittel strömt aufgrund von Reflexion der Druckwelle an der Seite 20 und der Expansion des Kältemittels aus Mit Erreichen der Öffnungskante 48 des Einlasses 24 strömt zu verdichtendes Kältemittel nach, indem es infolge des Gasimpulses in die Zelle 36 eingesaugt wird. Die gedachte Trennlinie 50 trennt das ausströmende Kältemittel vom einströmenden. Die rechtzeitige Verzögerung der Strömung und die Vermeidung einer Reflexion kann durch die richtige Anordnung der Schließkanten 52 und 54 vermieden werden, wobei auch hier die Anordnung der Strömungskante 52 wieder auf die Geschwindigkeit des ausströmenden Gases c₄ und die Umfangsgeschwindigkeit u abgestimmt ist.

Der Druckausgleich erfolgt innerhalb einer Zelle im übrigen mit Schallgeschwindigkeit, weshalb die Druckwellenmaschine 14' eine hohe Leistungsfähigkeit bei für eine Strömungsmaschine dieser Leistungsklasse vorteilhaft niedrigen Rotordrehzahlen von z.B. lediglich 10000 bis 20000 Umdrehungen pro Minute hat.

Obwohl natürlich ein externer Antrieb des Rotors vorhanden sein kann, sind auch Ausführungsformen erreichbar, bei denen ausschließlich die impulskräfte des in die Druckwellenmaschine 14' einströmenden Kältemittels zum Antrieb des Rotors 22 ausreichen.

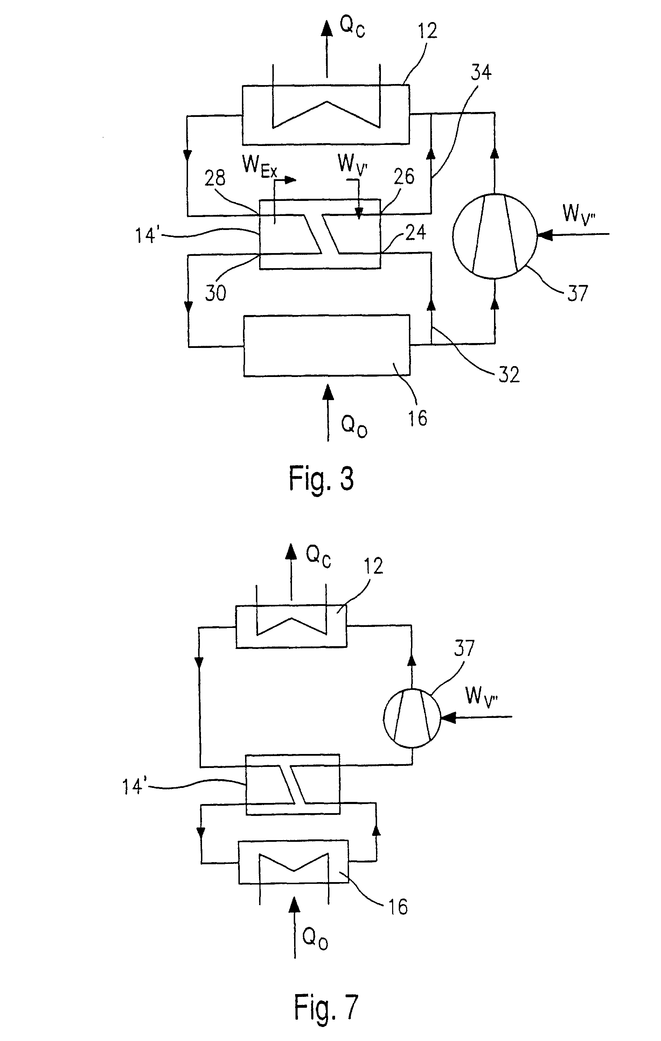

Anstelle der Parallelschaltung des Zusatzverdichters 37 kann dieser, wie in Figur 7 dargestellt, auch in Reihe mit dem Verdichterabschnitt der Druckwellenmaschine 14' geschaltet werden. Der gesamte Kältemittelstrom wird durch die Druckwellenmaschine 14' auf ein erstes Druckniveau gebracht und dann im Zusatzverdichter 37 auf den im Verflüssiger oder Gaskühler 12 erforderlichen Druck. Die Ausführungsform nach Figur 7 hat gegenüber der in Figur 3 gezeigten den Vorteil, daß weniger Leitungen vorgesehen sind und weniger innere Leckageverluste durch die geringere Druckdifferenz erwartet werden. Außerdem ist die Verdichtungsendtemperatur in der Maschine niedriger, woduch sich weniger thermodynamische Verluste ergeben werden. Vorteilhaft ist ferner, daß die Maschine ohne größere Abweichungen zu konventionellen Anlageschaltungen frei in der Nähe des Verdampfers plaziert werden kann.

Wie aus den gezeigten Ausführungsformen ersichtlich, ist vorzugsweise kein Ventil vorhanden, was die Klimaanlage sehr günstig macht und eine Voraussetzung für eine geringe Störanfälligkeit ist.

Wärmepumpenschaltungen kann der Fachmann in einfacher Weise aus den gezeigten Anlagenschaltungen ableiten, wobei entsprechende Umschaltventile für den wahlweisen Heiz-, Kühl- oder Entfeuchtungsbetrieb vorzusehen sind.

## Patentansprüche

1. Klimaanlage für Kraftfahrzeuge, mit
einem Kältemittelkreislauf,
mit wenigstens einem Verdichter (10; 37) und
mit einer Druckwellenmaschine (14; 14'), die eine Expansionsvorrichtung bildet **dadurch gekennzeichnet, daß** in der Druckwellenmaschine (14, 14') Kältemittel in einen Naßdampf-Zustand gebracht wird.

2. Klimaanlage nach Anspruch 1, **dadurch gekennzeichnet, daß** das Kältemittel Kohlendioxid ist und die Klimaanlage so ausgebildet ist, daß das Kohlendioxid im Kältemittelkreislauf aus einem überkritischen Zustand in einen Naßdampf-Zustand gebracht werden kann.

3. Klimaanlage nach Anspruch 2, **dadurch gekennzeichnet, daß** der Kältemittelkreislauf in Abhängigkeit von der Umgebungstemperatur eine transkritische oder unterkritische Prozeßführung aufweist.

4. Klimaanlage nach einem der vorhergehenden Ansprüche, **dadurch gekennzeichnet, daß** die Druckwellenmaschine (14) und der Verdichter (10) so miteinander verschaltet sind, daß beim Expansionsvorgang in der Druckwellenmaschine (14; 14') frei werdende Energie zur Verdichtung (10) genutzt wird.

5. Klimaanlage nach einem der vorhergehenden Ansprüche, **dadurch gekennzeichnet, daß** die Druckwellenmaschine (14') einen Verdichterabschnitt hat und
dieser so in den Kältemittelkreislauf eingebunden ist, daß die Druckwellenmaschine (14') zugleich den Verdichter bildet.

6. Klimaanlage nach Anspruch 5, **gekennzeichnet durch** einen Zusatzverdichter (37), der mit dem Verdichterabschnitt der Druckwellenmaschine (14') in Reihe geschaltet ist.

7. Klimaanlage nach Anspruch 6, **dadurch gekennzeichnet, daß** der Zusatzverdichter (37) stromabwärts des Verdichterabschnitts angeordnet ist.

8. Klimaanlage nach Anspruch 5, **gekennzeichnet durch** einen Zusatzverdichter (37), der mit dem Verdichterabschnitt der Druckwellenmaschine (14') parallel geschaltet ist.

9. Klimaanlage nach einem der vorhergehenden Ansprüche, **dadurch gekennzeichnet, daß** die Druckwellenmaschine (14; 14') ausschließlich durch Impulskräfte des in ihr expandierenden Kältemittels angetrieben wird.

10. Klimaanlage nach einem der vorhergehenden Ansprüche, **dadurch gekennzeichnet, daß** der Kältemittelkreislauf so ausgebildet ist, daß die Klimaanlage wahlweise auch als Wärmepumpe betrieben werden kann.

11. Verfahren zum Betreiben einer Klimaanlage für Kraftfahrzeuge mit dem Schritt:
- in einem Kältemittelkreislauf wird eine Druckwellenmaschine (14; 14') integriert und **gekennzeichnet durch** den Schritt:
- Kältemittel wird in der Druckwellenmaschine (14; 14') wenigstens teilweise in einen Naßdampf-Zustand gebracht.

12. Verfahren nach Anspruch 11, **dadurch gekennzeichnet, daß** als Kältemittel Kohlendioxid verwendet wird, das in der Druckwellenmaschine (14; 14') abhängig von der Umgebungstemperatur von einem überkritischen in einen Naßdampf-Zustand gebracht werden kann.

13. Verfahren nach Anspruch 12, **dadurch gekennzeichnet, daß** es abhängig von der Umgebungstemperatur unter transkritischer oder unterkritischer Prozeßführung abläuft.

## Claims

1. Air conditioning system for motor vehicles, having a refrigerant cycle, having at least one compressor (10; 37) and having a pressure-wave machine (14; 14') which forms an expansion appliance, **characterized in that** refrigerant is brought into a saturation condition in the pressure-wave machine (14; 14').

2. Air conditioning system according to Claim 1, **characterized in that** the refrigerant is carbon dioxide and the air conditioning system is configured in such a way that the carbon dioxide can be brought from a supercritical condition into a saturation condition in the refrigerant cycle.

3. Air conditioning system according to Claim 2, **characterized in that**, depending on the ambient temperature, the refrigerant cycle exhibits a transcritical or subcritical process.

4. Air conditioning system according to one of the preceding claims, **characterized in that** the pressure-wave machine (14) and the compressor (10) are connected together in such a way that energy released during the expansion procedure in the pressure-wave machine (14; 14') is used for the compression (10).

5. Air conditioning system according to one of the preceding claims, **characterized in that** the pressure-wave machine (14') has a compressor section and this is connected into the refrigerant cycle in such a way that the pressure-wave machine (14') also forms the compressor.

6. Air conditioning system according to Claim 5, **characterized by** an additional compressor (37) which is connected in series with the compressor section of the pressure-wave machine (14')

7. Air conditioning system according to Claim 6, **characterized in that** the additional compressor (37) is arranged downstream of the compressor section.

8. Air conditioning system according to Claim 5, **characterized by** an additional compressor (37) which is connected in parallel with the compressor section of the pressure-wave machine (14').

9. Air conditioning system according to one of the preceding claims, **characterized in that** the pressure-wave machine (14; 14') is exclusively driven by inertia forces of the refrigerant expanding in it.

10. Air conditioning system according to one of the preceding claims, **characterized in that** the refrigerant cycle is configured in such a way that the air conditioning system can also be optionally operated as a heat pump.

11. Method of operating an air conditioning system for motor vehicles, having the following step:
- a pressure-wave machine (14; 14') is integrated in the refrigerant cycle and **characterized by** the step:
- refrigerant is at least partially brought into the saturated condition in the pressure-wave machine (14; 14').

12. Method according to Claim 11, **characterized in that** carbon dioxide is used as the refrigerant, which carbon dioxide can, depending on the ambient temperature, be brought from a supercritical into a saturation condition in the pressure-wave machine (14; 14').

13. Method according to Claim 12, **characterized in that**, depending on the ambient temperature, it takes place with a transcritical or subcritical process.

## Revendications

1. Installation de climatisation pour un véhicule automobile comportant un circuit de fluide frigorifique,
au moins un compresseur (10, 37)
une machine à onde de pression (14, 14') constituant un dispositif d'expansion,
**caractérisée en ce que**
la machine à onde de pression (14, 14') met l'agent frigorifique à l'état d'une vapeur humide.

2. Installation de climatisation selon la revendication 1,
**caractérisée en ce que**
l'agent frigorifique est du dioxyde de carbone et l'installation de climatisation est conçue pour mettre le dioxyde de carbone dans le circuit d'agent frigorifique pour le faire passer d'un état surcritique à un état de vapeur humide.

3. Installation de climatisation selon la revendication 2,
**caractérisée en ce que**
le circuit d'agent frigorifique comporte un pilotage de procédé transcritique ou souscritique en fonction de la température ambiante.

4. Installation de climatisation selon l'une des revendications précédentes,
**caractérisée en ce que**
la machine à onde de pression (14) et le compresseur (10) sont reliés de façon à utiliser pour la compression (10) l'énergie libérée par l'opération d'expansion dans la machine à onde de pression (14, 14').

5. Installation de climatisation selon l'une quelconque des revendications précédentes,
**caractérisée en ce que**
la machine d'onde de pression (14') comporte un segment de compresseur de façon que celui-ci soit branché dans le circuit d'agent frigorifique et la machine à onde de pression (14') constitue en même temps le compresseur.

6. Installation de climatisation selon la revendication 5,
**caractérisée par** un compresseur supplémentaire (37) branché en série avec le segment de compresseur de la machine à onde de pression (14').

7. Installation de climatisation selon la revendication 6,
**caractérisée en ce que**
le compresseur supplémentaire (37) est installé en aval du segment de compresseur.

8. Installation de climatisation selon la revendication 5,
**caractérisée par** un compresseur supplémentaire (37) branché en parallèle avec le segment de compresseur de la machine à onde de pression (14').

9. Installation de climatisation selon l'une des revendications précédentes,
**caractérisée en ce que**
la machine à onde de pression (14), (14') est entraînée uniquement par la force impulsionnelle de l'agent frigorifique qui s'expanse dans cette machine.

10. Installation de climatisation selon l'une des revendications précédentes,
**caractérisée en ce que**
le circuit d'agent frigorifique est réalisé pour que l'installation de climatisation peut fonctionner au choix comme pompe à chaleur.

11. Procédé de mise en oeuvre d'une installation de climatisation de véhicule automobile selon lequel
dans un circuit d'agent frigorifique on intègre une machine à onde de pression (14, 14'),
**caractérisé par** l'étape suivante :
l'agent frigorifique est mis par la machine à onde de pression (14, 14') au moins en partie à l'état de vapeur humide.

12. Procédé selon la revendication 11,
**caractérisé en ce que**
l'agent frigorifique du dioxyde de carbone mis dans la machine à onde de pression (14, 14') d'un état surcritique à un état de vapeur humide en fonction de la température ambiante.

13. Procédé selon la revendication 12,
**caractérisé en ce que**
la conduite du procédé se fait à l'état transcritique ou souscritique selon la température ambiante.
